Europäisches Patentamt

European Patent Office

Office européen des brevets

(11) Veröffentlichungsnummer: **0 124 763**
**B1**

# EUROPÄISCHE PATENTSCHRIFT

(45) Veröffentlichungstag der Patentschrift:
09.12.87

(51) Int. Cl.⁴: **B 23 P 19/04**

(21) Anmeldenummer: **84103647.8**

(22) Anmeldetag: **03.04.84**

(54) Vorrichtung zum Einpressen von Möbel-Montageteilen.

(30) Priorität: **05.05.83 DE 3316358**

(43) Veröffentlichungstag der Anmeldung:
**14.11.84 Patentblatt 84/46**

(45) Bekanntmachung des Hinweises auf die Patenterteilung:
**09.12.87 Patentblatt 87/50**

(84) Benannte Vertragsstaaten:
**BE FR GB IT NL SE**

(56) Entgegenhaltungen:
**DE - A - 3 223 264**
**FR - A - 2 188 474**

(73) Patentinhaber: **IMA-Norte Maschinenfabriken Klessmann GmbH & Co., Am Ölbach 19, D-4830 Gütersloh 1 (DE)**

(72) Erfinder: **Riesmeier, Wilhelm, Ing. grad., Franz-Liszt-Strasse 5, D-4990 Lübbecke 1 (DE)**
Erfinder: **Kempkensteffen, Heinz, Im grünen Winkel 1, D-4835 Rietberg 3 (DE)**

(74) Vertreter: **Elbertzhagen, Otto et al, Patentanwälte Thielking & Elbertzhagen Gadderbaumer Strasse 20, D-4800 Bielefeld 1 (DE)**

## Beschreibung

Die Erfindung bezieht sich auf eine Vorrichtung zum Einpressen von Möbel-Montageteilen der im Gattungsbegriff des Patentanspruchs 1 näher bezeichneten Art.

Automatisch arbeitende Einpressvorrichtungen solcher Art, die zumeist auch eine Bohrstation zum Anbringen der Bohrungen in den Möbelteilen haben, sind in mehrfachen Ausführungen durch offenkundige Vorbenutzungen bekannt. Dabei ist in der Regel dem Magazin für die Montageteile ein Schwingförderer zugeordnet, der die Vereinzelung der Montageteile vornimmt und diese in stets derselben Ausrichtung an einen Schacht des Magazins weitergibt. Der voluminöse Schwingförderer, das Magazin sowie die Einpress- und Bohrstation sind an einem Support angeordnet, der entsprechend dem jeweiligen Bohrbild quer und/oder längs zur Förderrichtung der Möbelteile verfahrbar ist. Wegen der erheblichen Abmessungen all dieser an dem Support angeordneten Aggregate ist es oft sehr schwierig, geringe Bohrungsabstände auf den Möbelteilen einzuhalten. Man hat deshalb schon zusätzliche Vorrichtungen an dem Support vorgesehen, die eine Verschachtelung der erwähnten Aggregate zulassen, um kleine Bohrabstände verwirklichen zu können; vgl. DE-Prospekt «Priess u. Horstmann, Bohr- und Einpresstechnik» der Priess, Horstmann & Co. Maschinenbau GmbH & Co. KG., D–4955 Hille 9.

Weiter haben die bekannten Bohr- und Einpressautomaten den Nachteil, dass ein kommissionsweises Einpressen der Montageteile, was einen häufigen Wechsel unterschiedlicher Montageteile erfordert, die sich gelegentlich durch ihre Abmessungen, vor allem aber durch verschiedene Farbtöne unterscheiden, nicht möglich ist. Denn es können mehrere Magazine einschliesslich der zugehörigen Schwingförderer wegen der Beengtheit hinsichtlich der baulichen Abmessungen nicht an einem einzigen Support untergebracht werden. Jeder dieser Bohr- und Einpressautomaten kann somit jeweils nur eine bestimmte Form der Beschlagteile oder nur Beschlagteile einer bestimmten Farbe vereinzeln und einpressen, weswegen insgesamt die bekannten Vorrichtungen mit je einem Magazin und gegebenenfalls einem Schwingförderer pro Bohr- und Einpressstation sehr aufwendig und dabei wenig flexibel sind.

Aus der DE-A1-3 223 264 ist ferner eine Maschine zum automatischen Montieren von Teilen bekannt, bei der allerdings die Werkstücke zusammen mit mehreren Montageteilen auf einer umlaufenden Förderbahn zu verschiedenen Montagestationen hin transportiert werden. Dazu müssen die Werkstücke auf der Förderbahn angehalten werden, damit sie in die betreffende Montagestation übernommen werden können. An den Montagestationen werden die Werkstücke noch mit weiteren Montageteilen bestückt, und es werden daran Bearbeitungsvorgänge vorgenommen. Daher müssen an den Montagestationen noch weitere Montageteile magaziniert werden, was dann zu der zuvor erwähnten Verschachtelung der notwendigen Aggregate führt.

Der Erfindung liegt daher die Aufgabe zugrunde, bei einer Vorrichtung der eingangs genannten Art Magazin und Einpressstation räumlich voneinander zu trennen, um das Magazin gegebenenfalls einschliesslich der weiter dazugehörenden Nebenaggregate ausserhalb des Arbeitsbereichs der Bohr- und Einpressstationen anzuordnen, wobei eine oder zugleich mehrere der Einpressstationen von einem oder mehreren Magazinen je nach Anzahl der unterschiedlich zu verwendenden Montageteile bedient werden können.

Diese Aufgabe wird bei einer Vorrichtung der gattungsgemässen Art nach der Erfindung durch die kennzeichnenden Merkmale des Patentanspruchs 1 gelöst.

Der besondere Vorteil der erfindungsgemässen Vorrichtung liegt in der hohen Flexibilität, welche eine leichte Anpassung an die jeweiligen Erfordernisse ermöglicht. So ist es für die kommissionsweise Fertigung der Möbelteile mit jeweils unterschiedlich anzubringenden Montageteilen von Vorteil, eine oder mehrere der Einpressstationen über die Fördervorrichtung von verschiedenen Magazinen und entsprechenden Zuführaggregaten mit unterschiedlichen Montageteilen versorgen zu können, während bei einer Serienfertigung aus einem einzigen Magazin mehrere der Einpressstationen mit gleichen Montageteilen bedient werden können. Die Mitnahme der Montageteile erfolgt zweckmässig über daran vorhandene Vorsprünge, wie Einpresszapfen, die in der Regel gleich ausgebildet und angeordnet sind, weswegen sonstige Verschiedenheiten der Montageteile hinsichtlich Form und Abmessung auf die Förderung von den Magazinen zu den Einpressstationen keinen Einfluss haben.

Vorteilhafte Ausgestaltungsmerkmale der erfindungsgemässen Vorrichtung ergeben sich aus den Unteransprüchen und aus der nachstehenden Beschreibung. Die Erfindung wird nachfolgend anhand der Zeichnung an einem Ausführungsbeispiel näher erläutert. Es zeigt:

Fig. 1 eine schematische Draufsicht auf eine Vorrichtung zum Zuführen und Einpressen von Montageteilen in Möbelteile,

Fig. 2 einen Längsschnitt durch die Vorrichtung längs der Linie I-I in Fig. 1,

Fig. 3 in vergrösserter Darstellung die Einzelheit «A» in Fig. 2,

Fig. 4 einen Teilschnitt durch die Vorrichtung gem. Fig. 3 längs der Linie IV-IV,

Fig. 5 einen Teilquerschnitt durch die Vorrichtung gem. Fig. 1 längs der Linie II-II mit einer Ansicht der Bohr- und Einpressstation,

Fig. 6 einen Teilquerschnitt durch die Vorrichtung längs der Linie III-III in Fig. 1 mit einer Ansicht der Bohr- und Einpressstation in quer ausgefahrener Position und

Fig. 7 die Ansicht eines Möbel-Montageteils.

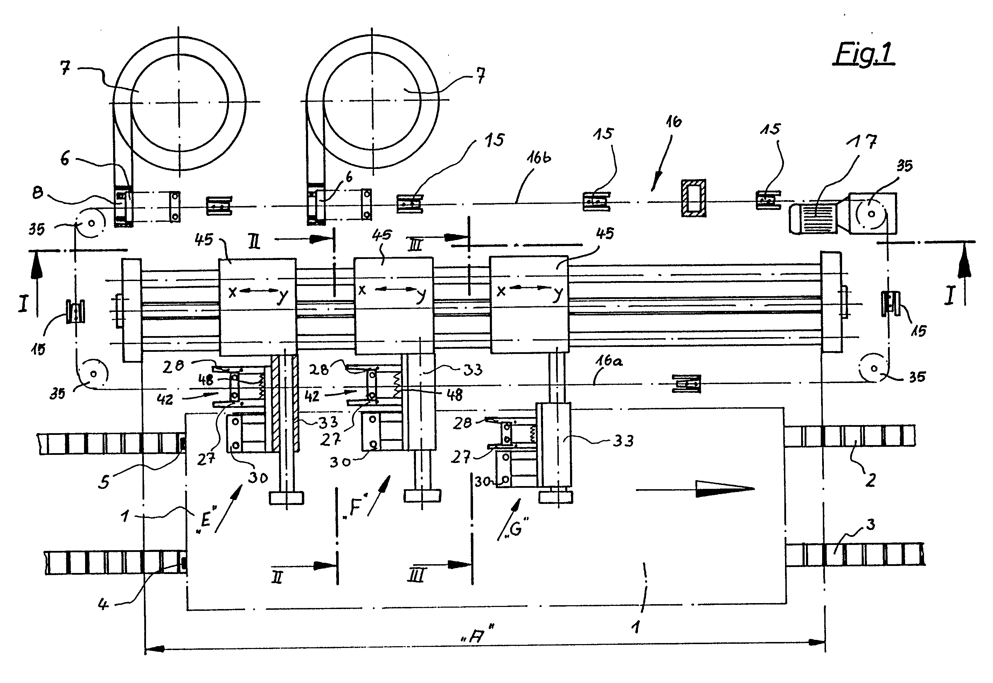

Man erkennt in Figur 1 schematisch den Aufbau einer automatisch arbeitenden Vorrichtung zum Bohren von Möbelteilen und Einpressen von Montageteilen in die eingebrachten Bohrungen. Die Möbelteile 1 sind üblicherweise plattenförmig und werden horizontal liegend auf zwei parallelen Transportketten 2 und 3 eines Kettenförderers transportiert. An den Transportketten 2 und 3 sind in Taktabständen die Möbelteile 1 mitnehmende Nocken 4 und 5 angeordnet, welche die Möbelteile 1 zugleich in Förderrichtung ausrichten. Die Transportketten 2 und 3 werden intermittierend angetrieben, und es wird das jeweilige Möbelteil 1 im Bereich einer mit «A» bezeichneten Arbeitsposition an der Bohr- und Einpressvorrichtung angehalten.

Die gesamte Vorrichtung dient dazu, die Möbelteile 1 für die Einpressung von Montageteilen 6 vorzubereiten und zugleich diese Montageteile 6 in die Möbelteile 1 einzupressen. Ein solches Montageteil 6 ist in Figur 7 in seinen Einzelheiten wiedergegeben. Es handelt sich hierbei um das ortsfest an den Innenseiten der Seitenwände eines Möbelkorpus zu montierenden Teil eines sogenannten Topfbandscharniers, welches in der Scharniertechnik als Verstellplatte bezeichnet wird. Die Verstellplatte 43 ist in der Regel aus Kunststoff gefertigt und besitzt je nach Farbausstattung des betreffenden Möbels eine unterschiedliche Farbgebung. Ausserdem kann das Höhenmass «h» der Verstellplatte 43 differieren, was von der Art des verwendeten Topfscharniers abhängt. An der Befestigungsseite besitzt die Verstellplatte 43 zwei Dübel oder Einpresszapfen 9, die in die entsprechend vorgebohrten Löcher der Möbelteile 1 fest eingedrückt werden und sich darin mittels Harpunenstegen oder dergleichen verhaken. Der Durchmesser und der Abstand der Einpresszapfen 9 ist in der Regel bei sämtlichen Verwendung findenden Montageteilen 6 gleich, da er auf das bei Möbelteilen übliche Rastermass, in der Regel von 32 mm, abgestellt ist.

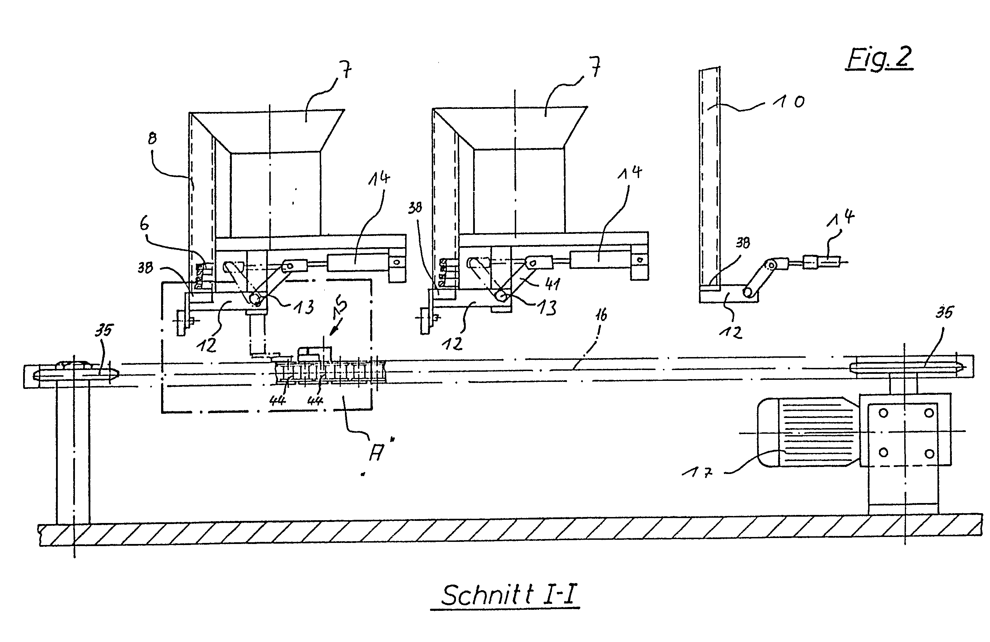

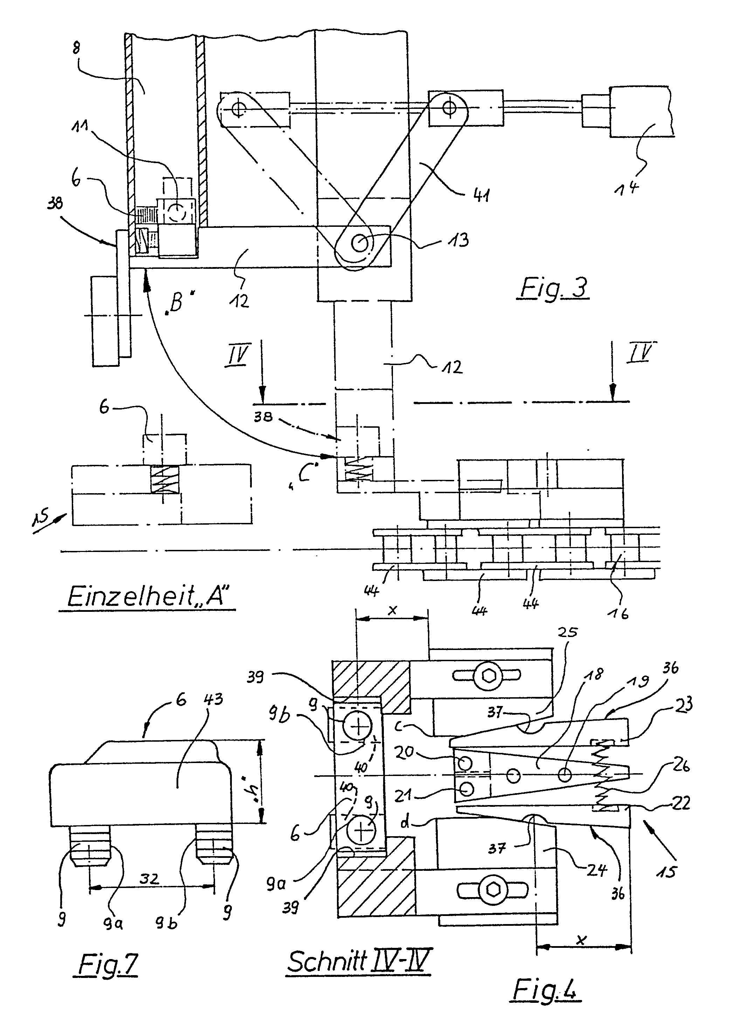

Wie Figur 1 weiter zeigt, werden die Montageteile 6 in Schwingförderern 7 bevorratet und von diesen vereinzelt an einen vertikal gerichteten Schacht eines Magazins 8 abgegeben, in dem die Montageteile 6 mit ihren Einpresszapfen 9 horizontal liegend deckungsgleich übereinander bereitgehalten werden. Wie ergänzend dazu Figur 2 veranschaulicht, kann auch ein von Hand zu füllendes Magazin 10 vorgesehen sein, bei dem auf die automatische Zuführung der Montageteile 6 über Schwingförderer 7 verzichtet ist.

Am Unterende der Magazine 8 und 10 ist eine Klemmvorrichtung 11 angeordnet, die jeweils eines der Montageteile 6 in eine Bereithaltevorrichtung 38 einer Aufnahmeschwinge 12 fallen lässt. Dies ist im einzelnen in den Figuren 2 und 3 erkennbar. Die Aufnahmeschwinge 12 dreht das jeweilige Montageteil 6 in eine Lage, in der die Einpresszapfen 9 daran in eine vertikale Lage nach unten gerichtet sind, indem die gesamte Aufnahmeschwinge 12 von einem Antriebszylinder 14 über einen Hebel 41 aus ihrer Horizontalposition am Unterende des Magazins 8 bzw. 10 um 90 Grad bis in eine Vertikallage verschwenkt wird. Dazu ist die Aufnahmeschwinge 12 zusammen mit dem Hebel 41 gestellfest um eine Achse 13 drehbar gelagert. In der Vertikalposition der Aufnahmeschwinge 12 befindet sich das jeweilige Montageteil 6 in einer Übernahmestellung, in der es in Horizontalrichtung an einer Seite der Aufnahmeschwinge aus der Bereithaltevorrichtung 38 herausgenommen werden kann. Dazu besitzt, wie Figur 4 veranschaulicht, die Bereithaltevorrichtung 38 eine Aufnahmekulisse 39, welche die Verstellplatte 43 beidseitig sowie an der rückwärtigen Längsseite lose umgreift, so dass zur Vorderseite in Querrichtung die Verstellplatte 43 ohne Kraftaufwand aus der Aufnahmekulisse 39 freikommen kann. Dabei steht das gesamte Montageteil 6 mit seinen unten liegenden Einpresszapfen 9 auf in entsprechendem Abstand zueinander stehenden Aufstandsschuhen 40 der Bereithaltevorrichtung 38 auf, die ebenfalls das Montageteil 6 in der vorbeschriebenen Querrichtung freigeben.

In Figur 1 erkennt man weiter, dass unterhalb der Magazine 8 eine Mitnehmervorrichtung 16 hindurchgeführt ist, die in einer Horizontalebene endlos umläuft. Die Mitnehmervorrichtung 16 besteht aus einer Kette, deren Glieder 44 in Figur 3 angedeutet sind. Die Förderkette 16 wird durch Kettenräder 35 umgelenkt, die in den Ecken eines Rechtecks angeordnet sind. Dadurch gliedert sich die Fördervorrichtung 16 in einen vorderen Abschnitt 16 a, der benachbart dem Förderweg der Möbelteile 1 an den Transportketten 2, 3 liegt, und einen rückwärtigen Abschnitt 16 b, entlang dem die Magazine 8, 10 sowie die Schwingförderer 7 angeordnet sind.

Zum Transport der Montageteile 6 sind auf der Fördervorrichtung 16 Aufnahmevorrichtungen 15 in Gestalt von Mitnehmerböcken angeordnet. Die Mitnehmerböcke 15 sitzen in gleichen Abständen in einer Vielzahl auf der Fördervorrichtung 16. Wie man in Figur 2 erkennt, liegen die Mitnehmerböcke 15 in der Vertikalposition der jeweiligen Aufnahmeschwinge 12 in Höhe derer Bereithaltevorrichtung 38 und werden durch diese hindurchgeführt. Dabei wird das jeweilige Montageteil 6 aus der Aufnahmekulisse 39 bzw. von den Aufstandsschuhen 40 weg mitgenommen, und es besitzt der Mitnehmerbock 15 entsprechende Klemm- oder Spannvorrichtungen für die Montageteile 6. Es versteht sich, dass die Förderrichtung der Fördervorrichtung 16 im Bereich der abgesenkten Aufnahmeschwingen 12 der Öffnungsrichtung der Aufnahmekulisse 39 jeweils entspricht. Entsprechend bewegt sich der gegenüber liegende, am Förderweg der Möbelteile 1 liegende Abschnitt 16 a der Fördervorrichtung in Richtung der Transportketten 32 für die Möbelteile 1.

Der Antrieb der Transportvorrichtung 16 erfolgt über einen Getriebemotor 17 auf eines der Umlenkräder 35 mit hoher Geschwindigkeit, die in der Grössenordnung von 40 bis 60 m/min liegt.

Dadurch können die einzelnen Montageteile 6 mit ausreichender Geschwindigkeit von den ausserhalb des Arbeitsbereichs liegenden Magazinen 8 und 10 zu den Einpressstationen gefördert werden.

Den Aufbau der Mitnehmerböcke 15 gibt Figur 4 im einzelnen wieder. Sie besitzen einen Grundkörper 18, welcher über Befestigungsbohrungen 19 auf der Kettenteilung festgemacht ist. In Förderrichtung der Fördervorrichtung 16 gesehen besitzt der Grundkörper 18 an seinem Vorderende zwei symmetrisch zur Längsmitte liegende Anlenkpunkte 20 und 21 für daran schwenkbar gelagerte Spannbacken 22 und 23. Die Spannbacken 23 sind zu der durch die Längsmitte des Grundkörpers 18 hindurchgehenden Vertikalebene spiegelsymmetrisch ausgebildet und angeordnet. Sie sind mit ihren rückwärtigen Enden voneinander weg spreizbar. Dazu dient eine zwischen den Enden der Spannbacken 22 und 23 angeordnete Druckfeder 26. In der gespreizten Stellung verlaufen die Aussenseiten 36 der Spannbacken 22 und 23 zum Vorderende hin konvergierend, während die Spannbacken 22 und 23 am Grundkörper 18 so weit eingedrückt werden können, bis die Aussenseiten der Backen 22 und 23 zueinander parallel sind. Etwa in der Mitte über die Länge des Grundkörpers 18 gesehen sind in die Aussenseiten 36 der Backen 22 und 23 nach aussen offene Aussparungen 37 eingearbeitet. Der Rundungsradius der Aussparungen 37 entspricht dem Halbmesser der Einpresszapfen 9 an den Montageteilen 6.

An der Einlaufseite der Bereithaltevorrichtung 38 sind in Höhe der Mitnehmerböcke 15 ferner Auflaufkufen 24 und 25 mit in Förderrichtung konvergierenden Auflaufschrägen angeordnet, welche in Eingriff mit den konvergierenden Aussenseiten der Backen 22 und 23 des jeweils auflaufenden Mitnehmerbocks 15 kommen. Dadurch werden die Spannbacken 22 und 23 aus der gespreizten Anordnung heraus zusammengedrückt, wonach dann der jeweilige Mitnehmerbock 15 unter der Verstellplatte 43 zwischen den beiden Einpresszapfen 9 in Förderrichtung der Fördervorrichtung 16 hindurchtauchen kann.

Wie Figur 4 ferner zeigt, ist das Abstandsmass zwischen den Aussparungen 37 und den rückwärtigen Enden der Spannbacken 22 und 23 gleich dem Mass «X». Dieses Abstandsmass entspricht weiter dem Abstand zwischen den Vorderenden 24 d und 25 c der Auflaufkufen 24 und 25 zu den Einpresszapfen 9 der Montageteile 6 hin, so dass beim Freikommen mit ihren rückwärtigen Enden von den Kanten 24 d und 25 c die Backen 22 und 23 infolge der Druckfeder 26 gespreizt werden und gleichzeitig die Aussparungen 37 in den Aussenseiten 36 der Spannbacken 22 und 23 mit den Innenseiten 9 a und 9 b der Einpresszapfen 9 des jeweiligen Beschlagteils 6 in Eingriff kommen. Da von der Fördervorrichtung 16 der jeweilige Mitnehmerbock 15 in Öffnungsrichtung der Aufnahmekulisse 39 der Bereithaltevorrichtung 38 weitergefördert wird, kommt das gesamte Montageteil 6 aus der Bereithaltevorrichtung 38 frei und wird von dem Mitnehmerbock 15 auf der Fördervorrichtung 16 mitgenommen.

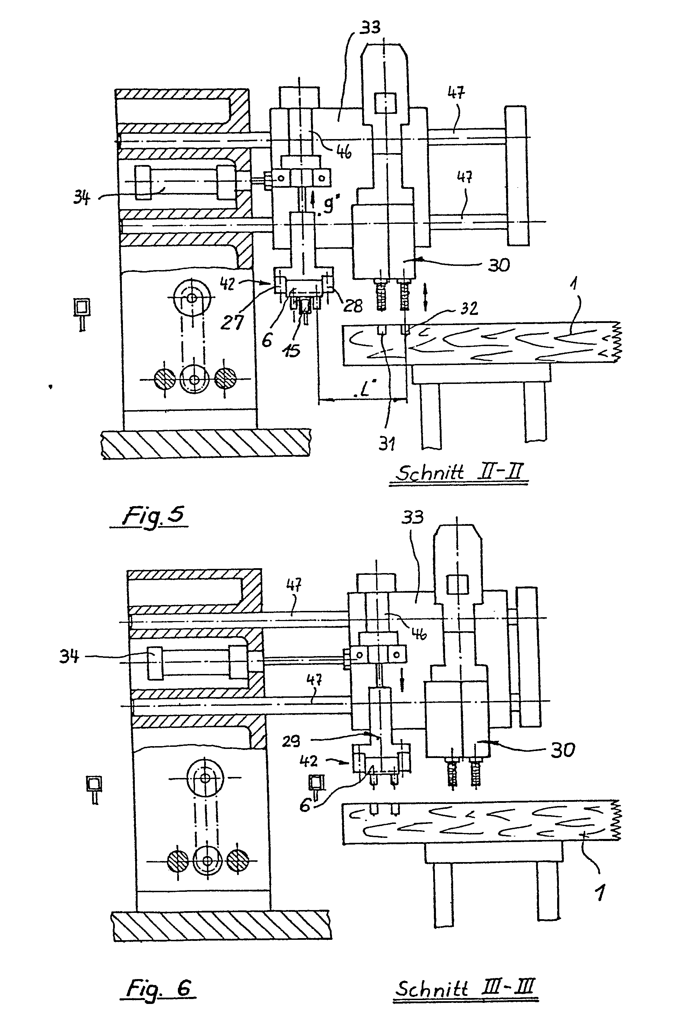

Entlang dem vorderen Abschnitt 16 a der Fördervorrichtung 16 sind mehrere Bohrstationen 30 und Einpressstationen 29 hintereinander angeordnet. Über einen Spindelantrieb sind diese Stationen 29, 30 in der in Figur 1 angedeuteten X-Y-Richtung verfahrbar. Jeweils eine Bohrstation 30 und eine Einpressstation 29 sind an einem in dieser Richtung verfahrenen Support 45 angeordnet und sitzen jeweils an einer Querführung 33, an der die Bohr- und Einpressstation 30, 29 jeweils eine Bohrposition und eine Einpressposition einnehmen kann. Dies ist im einzelnen in den Figuren 5 und 6 dargestellt, wobei Figur 5 die Bohrposition und Figur 6 die Einpressposition wiedergibt. Der Querhub, um den die Bohr- und Einpressstation 30, 29 verfahrbar ist, entspricht dem Abstand der Bohrwerkzeuge von den Einpresszapfen 9 des jeweiligen Montageteils 6, das in der Einpressstation 29 aufgenommen ist. In der Bohrstellung bohrt zunächst die Bohrstation 30 zwei Dübellöcher 31 und 32 in die oben liegende Seite des jeweiligen Möbelteils 1, sodann wird die Einpressstation 29 in Querrichtung bis über die Dübellöcher 31 und 32 verfahren, bis die Einpresszapfen 9 des darin bereit gehaltenen Montageteils 6 axial mit den Bohrungen 31 und 32 ausgerichtet sind. Sodann wird die Einpressstation 29 über einen Hubzylinder 46 so weit abgesenkt, bis die Einpresszapfen 9 des jeweiligen Montageteils 6 voll in Eingriff mit den Bohrungen 31 und 32 des Möbelteils 1 gekommen sind. Danach wird die Einpressstation 29 um den Hub «g» wieder angehoben und die gesamte Einheit 29, 30 in die Bohrstellung quer zurückverfahren. Dazu sitzt die Einheit 29, 30 an einem Führungsstück 33, das auf in Querrichtung angeordneten Führungsstangen 47 gelagert ist, und der Querhub des Führungsstücks 33 wird über einen Pneumatikzylinder 34 bewirkt.

Damit ebenso selbsttätig wie die Übernahme der Beschlagteile 6 an den Magazinen 8 und 10 die Weitergabe dieser Teile an die jeweils vorbestimmte Einpressstation 29 erfolgt, besitzt jede dieser Stationen eine Fangvorrichtung 42, die in Höhe der umlaufenden Mitnehmerböcke 15 auf der Fördervorrichtung 16 angeordnet ist.

Die Fangvorrichtung 42 besteht im wesentlichen aus einer Fangkulisse am Unterende der Einpressstation 29, die zugleich als Aufnahme des jeweiligen Montageteils 6 für den Einpressvorgang dient. Für die Abnahme des Montageteils 6 von dem jeweiligen Mitnehmerbock 15 dient die Fangkulisse im wesentlichen als Anschlag, um die weitere Mitnahme durch den Mitnehmerbock 15 in Förderrichtung der Fördervorrichtung 16 zu unterbinden. Dabei federn die Spannbacken 22 und 23 an dem jeweiligen Mitnehmerbock 15 ein und geben die Einpresszapfen 9 des Montageteils 6 frei.

Zudem kann die Fangvorrichtung 42 noch Fangklauen 27 und 28 besitzen, die entgegen der Förderrichtung der Fördervorrichtung 16 am Unterende der Einpressstation 29 in Höhe der Mitnehmerböcke 15 vorstehen. Die Fangklauen 27 und 28 besitzen auf die Fangkulisse hinführende Auflaufschrägen und sind ausserdem federnd an dem Unterende der Einpressstation 29 aufgehängt, weswegen sie das jeweilige Montageteil 6 über die Verstellplatte 23 zwischen sich verspannen können. Die Spannkraft wird dabei von einer am rückwärtigen Ende der Fangklauen 27 und 28 angreifenden Zugfeder 47 aufgebracht.

**Patentansprüche**

1. Vorrichtung zum Einpressen von Montageteilen (6), wie Beschlagteilen mit Einpresszapfen, in Bohrungen von daran taktweise vorbeigeförderten Möbelteilen, bestehend aus zumindest einer am Förderweg der Möbelteile liegenden Einpressstation (29), weiter aus zumindest einem Magazin (8, 10) für die Montageteile (6) und aus einer Übergabevorrichtung zur Weitergabe der Montageteile (6) von dem Magazin (8, 10) zu der Einpressstation (29), dadurch gekennzeichnet, dass die Übergabevorrichtung aus einer kontinuierlich umlaufenden Fördervorrichtung (16) besteht, an der Aufnahmevorrichtungen (15) für die Montageteile (6) angeordnet sind und die einen am Förderweg der Möbelteile verlaufenden Abschnitt (16a) hat, an dem eine die Montageteile (6) übernehmende Fangvorrichtung (42) der Einpressstation (29) angeordnet ist, und die ferner vom Förderweg der Möbelteile abliegende Abschnitte (16b) besitzt, an denen eines oder mehrere der Magazine (8, 10) mit je einer Bereithaltevorrichtung (38) für die Übergabe der Montageteile (6) an die Aufnahmevorrichtungen (15) der Fördervorrichtung (16) angeordnet sind.

2. Vorrichtung nach Anspruch 1, dadurch gekennzeichnet, dass an der Fördervorrichtung (16) zwei oder mehrere Einpressstationen (29) angeordnet sind.

3. Vorrichtung nach Anspruch 1 oder 2, dadurch gekennzeichnet, dass die Fördervorrichtung (16) in einer zur Förderebene der Möbelteile (1) parallelen Ebene umläuft.

4. Vorrichtung nach Anspruch 3, dadurch gekennzeichnet, dass der am Förderweg der Möbelteile (1) liegende Abschnitt (16 a) der Fördervorrichtung (16) geradlinig und dazu der vom Förderweg der Möbelteile (1) abgelegene Abschnitt (16 b) der Fördervorrichtung (16) parallel ist.

5. Vorrichtung nach Anspruch 4, dadurch gekennzeichnet, dass die Förderrichtung des am Förderweg der Möbelteile (1) liegenden Abschnitts (16 a) der Fördervorrichtung (16) gleich der der Möbelteile (1) ist.

6. Vorrichtung nach einem der Ansprüche 1 bis 5, dadurch gekennzeichnet, dass die Fördervorrichtung (16) eine über Umlenkräder (35) geführte Kette ist.

7. Vorrichtung nach einem der Ansprüche 1 bis 6, dadurch gekennzeichnet, dass die Aufnahmevorrichtungen (15) der Fördervorrichtung (16) aus darauf aufgesetzten Mitnehmerböcken bestehen, die an die Konfiguration der Montageteile (6) angepasste Klemm- oder Spannelemente (22, 23) haben, auf die sich die Montageteile (6) an der Bereithaltevorrichtung (38) der Magazine (8, 10) aufschieben und von denen sie an der Fangvorrichtung (42) der Einpressstation (29) abgestreift werden.

8. Vorrichtung nach Anspruch 7, dadurch gekennzeichnet, dass auf den Mitnehmerböcken (50) jeweils spiegelbildlich zur vertikalen Längsebene zwei Spannbacken (22, 23) in einer Horizontalebene um in Förderrichtung vorn liegende Anlenkpunkte (20, 21) schwenkbar gelagert sind, die über ein Spreizelement (26) spreizbar sind und in gespreizter Stellung in Förderrichtung konvergierende Aussenseiten (36) haben, deren mittlerer Abstand an den Abstand von Mitnehmervorsprüngen, wie zwei der Einpresszapfen (9) der Montageteile (6), angepasst ist.

9. Vorrichtung nach Anspruch 8, dadurch gekennzeichnet, dass in den Aussenseiten (36) der Spannbacken (22, 23) Aussparungen (37) für die Mitnehmervorsprünge (9) angeordnet sind.

10. Vorrichtung nach einem der Ansprüche 7 bis 9, dadurch gekennzeichnet, dass die Bereithaltevorrichtungen (38), die für die Bereithaltung je eines Montageteils (6) in Höhe der Mitnehmerböcke (15) oberhalb der Fördervorrichtung (16) angeordnet sind, in Förderrichtung der Fördervorrichtung (16) offen sind und durch sie hindurch die Mitnehmerböcke (15) hindurchgeführt sind.

11. Vorrichtung nach Anspruch 10, dadurch gekennzeichnet, dass die Bereithaltevorrichtungen (38) jeweils seitliche Aufnahmekulissen (39) für die Montageteile (6) und im Abstand der Mitnehmervorsprünge (9) unterseitige Aufstandsschuhe (40) haben, zwischen denen die Mitnehmerböcke (15) hindurchlaufen.

12. Vorrichtung nach Anspruch 10 oder 11, dadurch gekennzeichnet, dass an der Einlaufseite der Bereithaltevorrichtungen (38) Auflaufkufen (24, 25) mit in Förderrichtung konvergierenden Auflaufschrägen zum Zusammendrücken der Spannbacken (22, 23) der Mitnehmerböcke (15) angeordnet sind.

13. Vorrichtung nach einem der Ansprüche 10 bis 12, dadurch gekennzeichnet, dass die Magazine (8, 10) Schachtmagazine sind, in denen die Montageteile (6) vereinzelt übereinanderliegend angeordnet sind, und die Bereithaltevorrichtungen (38) je an einer Schwinge (12) angeordnet sind, die um 90 Grad bis in eine nach oben öffnende Lage der Aufnahmekulisse (39) unterhalb des Magazinschachtes schwenkbar ist.

14. Vorrichtung nach einem der Ansprüche 7 bis 13, dadurch gekennzeichnet, dass die Einpressstationen (29) quer zur Fördervorrichtung (16) verfahrbar und in ihrer Übernahmeposition mit der Fangvorrichtung (42), die daran unterseitig angeordnet ist, für die Montageteile (6) in Höhe der Mitnehmerböcke (15) über der Fördervorrichtung (16) angeordnet sind.

15. Vorrichtung nach Anspruch 14, dadurch gekennzeichnet, dass die Fangvorrichtung (42) eine die Montageteile (6) oberseitig und stirnseitig in Förderrichtung umfassende Fangkulisse hat, die zugleich Aufnahme der Montageteile (6) für den Einpressvorgang ist.

16. Vorrichtung nach Anspruch 14 oder 15, dadurch gekennzeichnet, dass an der Fangvorrichtung (42) beidseits der Fangkulisse auf diese zuführende, entgegen der Förderrichtung der Fördervorrichtung (16) vorstehende Fangklauen (27, 28) angeordnet sind.

## Claims

1. Apparatus for pressing assembly parts (6), such as fittings with press-in studs, into bores of pieces of furniture conveyed intermittently past it, consisting of at least one pressing-in station (29) located at the conveying path of the pieces of furniture, also of at least one magazine (8, 10) for the assembly parts (6) and of a transfer device for transferring the assembly parts (6) from the magazine (8, 10) to the pressing-in station (29), characterized in that the transfer device consists of a continuously rotating conveyor device (16), on which receiving devices (15) for the assembly parts (6) are arranged and which has a section (16a) which runs along the conveying path of the pieces of furniture and on which is arranged a pick-up device (42) of the pressing-in station (29), the said pick-up device (42) taking over the assembly parts (6), the conveyor device (16) possessing, furthermore, sections (16b) which are distant from the conveying path of the pieces of furniture and on which are arranged one or more of the magazines (8, 10), each with a supply device (38) for transferring the assembly parts (6) to the receiving devices (15) of the conveyor device (16).

2. Apparatus according to Claim 1, characterized in that two or more pressing-in stations (29) are arranged on the conveyor device (16).

3. Apparatus according to Claim 1 or 2, characterized in that the conveyor device (16) rotates in a plane parallel to the conveying plane of the pieces of furniture (1).

4. Apparatus according to Claim 3, characterized in that the section (16a) of the conveyor device (16) located at the conveying path of the pieces of furniture (1) is straight, and the section (16b) of the conveyor device (16) distant from the conveying path of the pieces of furniture (1) is parallel to it.

5. Apparatus according to Claim 4, characterized in that the conveying direction of the section (16a) of the conveyor device (16) located at the conveying path of the pieces of furniture (1) is the same as that of the pieces of furniture (1).

6. Apparatus according to one of Claims 1 to 5, characterized in that the conveyor device (16) is a chain guided via deflecting wheels (35).

7. Apparatus according to one of Claims 1 to 6, characterized in that the receiving devices (15) of the conveyor device (16) consist of take-up chocks attached to the latter and having gripping or clamping elements (22, 23) which match the configuration of the assembly parts (6) and onto which the assembly parts (6) are pushed at the supply device (38) of the magazines (8, 10) and from which they are stripped off at the pick-up device (42) of the pressing-in station (29).

8. Apparatus according to Claim 7, characterized in that, on each of the take-up chocks (50), two clamping jaws (22, 23) are mounted mirror-symmetrically relative to the vertical longitudinal plane so as to be pivotable in a horizontal plane about pivot points (20, 21) located at the front in the conveying direction, can be spread apart via a spreading element (26) and, in the spread-apart position, have outer faces (36) which converge in the conveying direction and the mean distance between which matches the distance between take-up projections, such as two of the press-in studs (9) of the assembly parts (6).

9. Apparatus according to Claim 8, characterized in that recesses (37) for the take-up projections (9) are arranged in the outer faces (36) of the clamping jaws (22, 23).

10. Apparatus according to one of Claims 7 to 9, characterized in that the supply devices (38), arranged above the conveyor device (16) for supplying an assembly part (6) level with each of the take-up chocks (15), are open in the conveying direction of the conveyor device (16), the take-up chocks (15) being guided through them.

11. Apparatus according to Claim 10, characterized in that the supply devices (38) each have lateral receiving slots (39) for the assembly parts (6) and stand-on shoes (40) located on their under side at a distance corresponding to that between the take-up projections (9) and between which the take-up chocks (15) run through.

12. Apparatus according to Claim 10 or 11, characterized in that on the infeed side of the supply devices (38) are arranged run-on skids (24, 25) with run-on slopes converging in the conveying direction and intended for pressing together the clamping jaws (22, 23) of the take-up chocks (15).

13. Apparatus according to one of Claims 10 to 12, characterized in that the magazines (8, 10) are shaft magazines, in which the assembly parts (6) are arranged so as to rest on top of one another individually, and the supply devices (38) are each arranged on a rocker (12) which is pivotable through 90 degrees into a position in which the receiving slot (39) is open towards the top under the magazine shaft.

14. Apparatus according to one of Claims 7 to 13, characterized in that the pressing-in stations (29) are movable transversely relative to the conveyor device (16) and, in their take-up position, are arranged, together with the pick-up device (42) located on their under side and intended for the assembly parts (6), above the conveyor device (16) and level with the take-up chocks (15).

15. Apparatus according to Claim 14, characterized in that the pick-up device (42) has a pick-up slot which surrounds the assembly parts (6) at the top and on the end faces in the conveying direction and which at the same time is a receptacle for the assembly parts (6) in the pressing-in operation.

16. Apparatus according to Claim 14 or 15, characterized in that pick-up claws (27, 28) leading to the pick-up slot and projecting counter to the conveying direction of the conveyor device (16) are arranged on the pick-up device (42) on both sides of the pick-up slot.

**Revendications**

1. Appareil pour enforcer des pièces de montage (6), comme des ferrures, pourvues de fiches, dans des forures de parties de meubles transportées en synchronisme en regard de ces pièces, constitué d'au moins un poste d'enfoncement (29) disposé sur le trajet de transport des parties de meubles, ainsi que d'au moins un magasin (8, 10) pour les pièces de montage (6) et d'un dispositif de transfert pour transférer les pièces de montage (6) du magasin (8, 10) au poste d'enfoncement (29), caractérisé en ce que le dispositif de transfert est constitué d'un dispositif entraîneur (16) en mouvement sans interruption suivant un trajet sans fin, sur lequel sont montés des dispositifs de réception (15) pour les pièces de montage (6) et qui comporte une section (16a) suivant le trajet de transport des parties de meubles, sur laquelle est prévu un dispositif de saisie (42) du poste d'enfoncement (29) prenant en charge les pièces de montage (6), et qui possède, en outre, une section (16b) éloignée du trajet de transport des parties de meubles, sur laquelle sont disposés un ou plusieurs des magasins (8, 10) chacun avec un dispositif pourvoyeur (38) pour transférer les pièces de montage (6) aux dispositifs récepteurs (15) du dispositif entraîneur (16).

2. Appareil suivant la revendication 1, caractérisé en ce que deux ou plus de deux postes d'enfoncement (29) sont montés sur le dispositif entraîneur (16).

3. Appareil suivant la revendication 1 ou 2, caractérisé en ce que le dispositif entraîneur (16) se déplace dans un plan parallèle au plan de transport des parties de meubles (1).

4. Appareil suivant la revendication 3, caractérisé en ce que la section (16a) du dispositif entraîneur (16) disposée sur le trajet de transport des parties de meubles (1) est rectiligne et la section (16b) du dispositif entraîneur (16) écartée du trajet de transport des parties de meubles (1) et parallèle à la première.

5. Appareil suivant la revendication 4, caractérisé en ce que la direction d'entraînement de la section (16a) du dispositif entraîneur (16) disposée sur le trajet de transport des parties de meubles (1) est la même que celle des parties de meubles (1).

6. Appareil suivant l'une quelconque des revendications 1 à 5, caractérisé en ce que le dispositif entraîneur (16) est une chaîne passant sur des roues à chaîne de renvoi (35).

7. Appareil suivant l'une quelconque des revendications 1 à 6, caractérisé en ce que les dispositifs récepteurs (15) du dispositif entraîneur (16) sont formés de selles d'entraînement placées sur ce dispositif, qui comportent des éléments de pinçage ou de serrage (22, 23) adaptés à la configuration des pièces de montage (6), sur lesquels les pièces de montage (6) se glissent sur le dispositif pourvoyeur (38) des magasins (8, 10) et desquels ces pièces de montage sont arrachées au niveau du dispositif de saisie (42) du poste d'enfoncement (29).

8. Appareil suivant la revendication 7, caractérisé en ce que deux mâchoires de serrage (22, 23) sont montées sur les selles d'entraînement (50), chaque fois d'une manière symétrique par rapport à leur plan longitudinal, vertical, de manière à pouvoir pivoter dans un plan horizontal autour de points de pivotement (20, 21) situés vers l'avant dans la direction d'entraînement, ces mâchoires pouvant être écartées par l'intermédiaire d'un élément écarteur (26) et présentant des côtés extérieurs (36) convergeant dans la direction d'entraînement dans la position écartée, leur écartement moyen étant adapté à l'écartement de saillies d'entraînement, comme deux des fiches (9) des pièces de montage (6).

9. Appareil suivant la revendication 8, caractérisé en ce que des évidements (37) pour les saillies d'entraînement (9) sont prévus dans les côtés extérieurs (36).

10. Appareil suivant l'une quelconque des revendications 7 à 9, caractérisé en ce que les dispositifs pourvoyeurs (38), qui, pour maintenir chacun une pièce de montage (6) au niveau des selles d'entraînement (15), sont disposés au-dessus du dispositif entraîneur (16), sont ouverts dans la direction d'entraînement du dispositif entraîneur (16) et les selles d'entraînement (15) sont passées au travers de ces dispositifs.

11. Appareil suivant la revendication 10, caractérisé en ce que les dispositifs pourvoyeurs (38) comportent chacun des coulisses de réception latérales (39) pour les pièces de montage (6) et des patins d'appui inférieurs (40) à distance des saillies d'entraînement (9) entre lesquelles passent les selles d'entraînement (15).

12. Appareil suivant la revendication 10 ou 11, caractérisé en ce que, du côté d'entrées des dispositifs pourvoyeurs (38) sont disposés des patins d'entrée (24, 25) présentant des rampes d'entrée convergeant dans la direction d'entraînement pour presser l'une contre l'autre les mâchoires de serrage (22, 23) des selles d'entraînement (15).

13. Appareil suivant l'une quelconque des revendications 10 à 12, caractérisé en ce que les magasins (8, 10) sont des magasins à goulotte dans lesquels les pièces de montage (6) sont superposées isolément et les dispositifs pourvoyeurs (38) sont montés chacun sur un bras pivotant (12) qui peut pivoter de 90° jusque dans une position ouverte vers le haut de la coulisse de réception (39) en dessous de la goulotte du magasin.

14. Appareil suivant l'une quelconque des revendicatios 7–13, caractérisé en ce que les postes d'enfoncement (29) peuvent être déplacés transversalement à la direction d'entraînement (16) et sont disposés, dans leur position de transfert, de telle façon que le dispositif de saisie (42) pour les pièces de montage (6), qui est monté sur leur côté inférieur, soit au niveau des selles d'entraînement (15) sur le dispositif entraîneur (16).

15. Appareil suivant la revendication 14, caractérisé en ce que le dispositif de saisie (42) comporte une coulisse de saisie confinant la pièce de montage (6) au niveau de son côté supérieur et de son côté d'about dans la direction d'entraînement, qui sert en même temps à maintenir la pièce de montage (6) pour l'opération d'enfoncement.

16. Appareil suivant la revendication 14 ou 15, caractérisé en ce que des griffes de saisie (27, 28) sont prévues sur le dispositif de saisie (42) des deux côtés de la glissière de saisie et font saillie vers celle-ci dans un sens opposé à la direction d'entraînement du dispositif entraîneur (16).

*Fig.1*

*Fig. 2*

*Schnitt I-I*

_Fig. 3_

_Einzelheit „A"_

_Fig. 7_

_Schnitt IV-IV_

_Fig. 4_

_Schnitt II-II_

_Fig. 5_

_Fig. 6_        _Schnitt III-III_